# EUROPÄISCHE PATENTSCHRIFT

(11) **EP 2 008 764 B1**
(45) Veröffentlichungstag und Bekanntmachung des Hinweises auf die Patenterteilung: **23.09.2009**
(21) Anmeldenummer: 07012821.0
(22) Anmeldetag: 29.06.2007
(51) Int. Cl.: B23Q 5/38, F16H 19/00, F16C 29/00

(54) **Linearführung**
Linear guide
Guidage linéaire

(43) Veröffentlichungstag der Anmeldung: 31.12.2008
(73) Patentinhaber: WAFIOS Aktiengesellschaft, 72719 Reutlingen (DE)
(72) Erfinder: Hammerer, Peter, 87541 Bad Hindelang (DE)
(74) Vertreter: Geyer, Fehners & Partner

(56) Entgegenhaltungen:
- EP-A- 1 366 850
- DE-B3-102004 008 409
- DE-C- 131 266
- JP-A- 2 299 724
- US-A- 3 592 459

## Beschreibung

Die Erfindung bezieht sich auf eine Linearführung mit mindestens zwei lagefest gelagerten Führungsleisten, auf denen ein relativ zu ihnen längsverschieblicher Führungsschlitten angebracht ist, der zur Erzeugung einer Relativbewegung zu den Führungsleisten mit einer Antriebseinrichtung versehen ist, welche ein Ritzel aufweist, das mit der Verzahnung einer parallel zu den Führungsleisten verlaufenden Zahnstange in Eingriff steht.

Die DE 39 22 326 C2 und die EP 0 934 783 B1 beschreiben jeweils eine Biegemaschine mit zwei Gelenkrobotern, deren jeder auf einer Linearführung einer Führungsbahn mit zwei lagefest gelagerten Führungsleisten über einen auf diesen längsverschieblich Führungsschlitten seitlich einer Greifeinheit verfahrbar ist. Der Vorschub erfolgt dabei über eine im Maschinenbett gelagerte Kette. Die Positioniergenauigkeit des Kettenantriebs ist allerdings ziemlich ungenügend, wobei die Kette auch die Tendenz aufweist, sich zu längen.

Aus der DE 603 01 913 T2 ist eine Linearführung bekannt, bei welcher die Führungsschlitten teilweise über Zahnstangenantriebe verschoben werden. Dabei ist entweder die Zahnstange über ihre Länge hinweg fest an einem Grundkörper fixiert und ein auf einem Schlitten angebrachtes, angetriebenes Ritzel rollt darauf ab, oder ein fest angebrachter Antrieb mit Ritzel bewegt eine am Schlitten befestigte Zahnstange. In beiden Fällen ist das Ausrichten der Zahnstangenführungen bei längeren Verfahrwegen aufwendig und wegen der einzuhaltenden Toleranzen nur schwer realisierbar. Die Bearbeitung der Flächen muß dabei sehr genau sein.

Aus der DE 601 14 303 T2 ist eine Linearführung für einen Spannzangenvorschub in einer Rohrbiegemaschine bekannt, wobei hier oberhalb einer Platte Führungsleisten und unter der Platte Zahnstangen angebracht sind, die mit darunter angeordneten Ritzeln den Vortrieb bewirken. Dabei ist der Fertigungs-, Ausricht- und Montageaufwand für die Zahnstange und die Linearführung sehr groß und muß überdies mehrfach ausgeführt werden.

Aus der DE 10 2004 008 409 B3 sowie der EP 1 380 362 A1 sind Linearführungen für einen Spannzangenvorschub bei Rohrbiegemaschinen bekannt, bei denen wiederum eine über ihre gesamte Länge befestigte Zahnstange in Eingriff mit einem entsprechenden Antriebsritzel steht. Auch hier ist der Fertigungs-, Ausricht- und Montageaufwand für die Zahnstange und die Linearführung relativ groß und muß wiederum mehrfach ausgeführt werden.

In der EP 1 366 850 A1 wird eine Linearführung beschrieben, die mit einer Führungsleiste arbeitet, an der mehrere Zahnstangensegmente befestigt sind. Bei Einsatz einer solchen Linearführung in einer Bearbeitungsmaschine übertragen sich die Vibrationen des Antriebs auf die Führungsleiste und reduzieren die Lebensdauer ganz erheblich.

Eine Linearführung der eingangs genannten Art ist aus der EP 0 345 536 B1 bekannt, die mit Führungsleisten in Form von Rundstangenführungen arbeitet. Eine der Rundstangenführungen ist gleichzeitig mit einer Verzahnung versehen und dient als Linearführungs- wie auch als Vorschubelement. Die Rundstangenführung ist dabei über ihre Länge hinweg auf einer Tragschiene befestigt, wobei die Verzahnung seitlich oder oben sitzt. Allerdings ist hier von Nachteil, daß Rundstangenführungen für größere Verschiebelängen (etwa größer als 2 m) nicht lieferbar sind.

Ausgehend davon liegt der Erfindung die Aufgabe zugrunde, eine Linearführung der eingangs genannten Art so weiter zu gestalten, daß sie bei besonders geringem Montage- und Richtaufwand auch für große Verfahrlängen (etwa größer als 2 m) funktionssicher einsetzbar ist.

Erfindungsgemäß wird dies bei einer Linearführung der eingangs genannten Art dadurch erreicht, daß die Zahnstange nur an ihrem vorderen und hinteren Ende befestigt und dazwischen hängend angeordnet ist, daß ferner am Führungsschlitten ein dem Ritzel zugeordnetes Führungselement, bevorzugt in Form eines Führungswagens, befestigt sowie in Längsrichtung der Zahnstange verschiebbar und an ihr formschlüssig gehaltert ist, das die Zahnstange an dem dem Zahneingriff zwischen Ritzel und Verzahnung gegenüberliegenden Bereich übergreift.

Bei der erfindungsgemäßen Linearführung bildet das Führungselement, das dem Ritzel zugeordnet ist, dadurch, daß es dem Zahneingriff zwischen Ritzel und Verzahnung gegenüberliegend die Zahnstange übergreift, während Ritzel und Führungselement in Zahneingriff miteinander stehen, eine Art Gegenhalterung in dem Sinne aus, daß, weil der Abstand zwischen Ritzel und Führungselement stets ungeändert bleibt, der Zahneingriff zwischen Ritzel und Verzahnung immer in einem definierten Abstand zum Führungsschlitten erfolgt. Der Führungsschlitten selbst erfährt seine Abstützung auf den lagefest gelagerten Führungsleisten. Damit ist sichergestellt, daß trotz der Befestigung der Zahnstange nur an ihrem vorderen und hinteren Ende und ihres freien Durchhängens dazwischen an der Verzahnungsstelle der Abstand der Zahnstange zum Schlitten, unabhängig von der aktuellen Position desselben, stets gleich groß ist.

Durch die hängend angebrachte Zahnstange kann verhindert werden, daß neben den beiden Befestigungsflächen, auf denen die lagefest gelagerten Führungsleisten, welche den Führungsschlitten tragen, befestigt sind, noch weitere Befestigungsflächen aufwendig hergestellt und anschließend die Zahnstange exakt darauf ausgerichtet werden müßten. Der Fertigungs- und Montageaufwand wird bei der erfindungsgemäßen Linearführung gegenüber den bekannten Antriebsausführungen deutlich reduziert, wobei ein Einsatz der erfindungsgemäßen Linearführung speziell auch für lange Führungswege erfolgen kann, bei denen die Fertigung, Montage und Ausrichtung der Zahnstange im geforderten Toleranzbereich einen ganz erheblichen Aufwand darstellen würde.

Bevorzugt wird die Gesamtanordnung der erfindungsgemäßen Linearführung so angelegt, daß die Zahnstange in dem Bereich ihres Zahneingriffs mit dem Ritzel auf einem Niveau angeordnet ist, das dem Niveau ihrer beiden Befestigungsstellen vorne und hinten entspricht. Damit ist die Möglichkeit gegeben, daß der Führungsschlitten ganz bis zu den beiden Befestigungsstellen der Zahnstange hin problemlos verfahren werden kann.

Bei einer weiteren bevorzugten Ausführung der Erfindung ist am Führungsschlitten vom Führungselement um einen Abstand in Längsrichtung der Zahnstange versetzt ein weiteres, zweites Führungselement befestigt, das ebenfalls entlang der Zahnstange verschiebbar und an ihr formschlüssig gehaltert ist.

In einer besonders vorzugsweisen Ausgestaltung der erfindungsgemäßen Linearführung sind das Ritzel und das ihm zugeordnete Führungselement in einem gemeinsamen Gehäuse angebracht, wobei an diesem auch der das Ritzel antreibende Antriebsmotor befestigt ist. Dadurch kann ein relativ guter Schutz des Zahneingriffs zwischen Ritzel und Antriebseinrichtung gegenüber Einflüssen aus der Umgebung erreicht und auch der Antriebsmotor für das Ritzel platzsparend unterhalb des Führungsschlittens angebracht werden.

Die formschlüssige Halterung der bzw. des Führungselemente(s) an der Zahnstange, auf der es/sie auch gleitet/en bzw. sich dort abstützt/en, läßt sich besonders bevorzugt dadurch erreichen, daß jedes Führungselement einen im wesentlichen U-förmigen Querschnitt aufweist, dessen Mittelsteg sich auf der Zahnstange abstützt, bevorzugt durch direkte Gleitanlage auf der Oberseite der Zahnstange, und dessen Seitenstege sich an den Seitenflanken der Zahnstange abstützen, wobei sie an ihren freien Enden jeweils eine zum anderen Seitensteg hin gerichtete, vorspringende Nase aufweisen, die jeweils in eine an der zugewandten Seitenflanke der Zahnstange entsprechend angebrachte Längsnut formschlüssig eingreift. Damit ist jedes Führungselement so ausgebildet, daß es die Zahnstange oben und seitlich übergreift und mit seinen unteren Enden in die Längsnuten beidseits der Zahnstange formschlüssig eingreift, so daß zwar eine Längsverschieblichkeit des Führungselementes entlang der Zahnstangen möglich ist, ein Abheben von dieser jedoch nicht erfolgen kann.

Wenn ein Führungselement direkt auf der Oberseite der Zahnstange gleitend anliegt, ist es dort bevorzugt mit einer die Reibung herabsetzenden Schicht, etwa mit einer Teflonschicht, überzogen.

Eine andere bevorzugte Ausgestaltung der Erfindung besteht darin, daß sich die Führungselemente auf der Zahnstange über Wälzlager oder Stützrollen abstützen, wodurch ganz besonders geringe Reibkräfte beim Verschieben der Führungselemente erreicht werden können (Rollreibung).

Die Ausbildung der Zahnstange kann bevorzugt so vorgenommen werden, daß sie aus einer Linearführungsleiste gebildet ist, an deren Unterseite Zahnstangensegmente befestigt sind, welche die Verzahnung ausbilden. In einer anderen, ebenfalls vorzugsweisen Ausgestaltung kann die Zahnstange jedoch auch in Form einer Rundzahnstange ausgebildet sein. In diesem Fall kann der Montagevorgang zum Verbinden einer Linearführungsleiste mit den an ihrer Unterseite anzubringenden Zahnstangensegmenten vollkommen eingespart werden.

Vorzugsweise wird/werden das/die Führungselement/e an der Unterseite des Führungsschlittens angebracht. Bei einer Ausbildung desselben als an einem Portal oben verschieblich gelagertem Führungsschlitten wird/werden das/die Führungselement/e jedoch bevorzugt seitlich oder oberhalb des Führungsschlittens vorgesehen.

Die erfindungsgemäße Linearführung läßt sich an vielen Arten von Werkzeugmaschinen oder Bearbeitungsmaschinen anbringen, etwa auf dem Grundgestell einer Draht-, Stab-, Leitungs- oder Rohrbearbeitungsmaschine, insbesondere jedoch bei einer Rohr- oder einer Drahtbiegemaschine.

Ferner kann bei einer erfindungsgemäßen Linearführung auf jedem Führungsschlitten eine Vielzahl unterschiedlicher Einrichtungen angebracht werden, die bei Betrieb der Maschine entlang einer Linearführung verfahren werden müssen. Ganz besonders bevorzugt wird bei der erfindungsgemäßen Linearführung jedoch auf einem Führungsschlitten ein Biegeroboter oder ein Drehgreifer angebracht.

Natürlich können auf einer Linearführung nach der Erfindung auch mehr als ein Führungsschlitten angebracht sein.

Die Erfindung wird nachfolgend anhand der Zeichnung im Prinzip beispielshalber noch näher erläutert. Es zeigen:
- Fig. 1: Eine perspektivische Draufsicht auf eine erfindungsgemäße Linearführung, auf der eine Roboterarm verschieblich geführt wird;
- Fig. 2: eine vergrößerte, von schräg vorne/unten gesehene Perspektivdarstellung des Schlittens und seiner Anordnung auf der Linearführung, entsprechend Fig. 1, und
- Fig. 3: eine Detail-Seitenansicht der Darstellung aus Fig. 2.

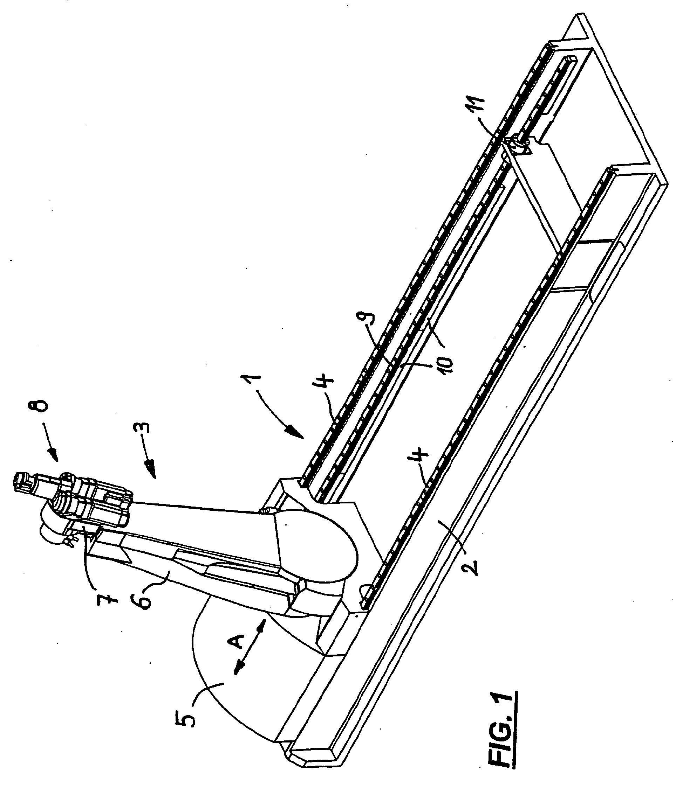

Fig. 1 zeigt als Ausschnitt eine Linearführung 1 bei einer Biegemaschine. Dabei ist ein Teil des Grundgestells 2 der Biegemaschine sowie einer der an dieser Biegemaschine angebrachten Biegeroboter 3 dargestellt.

Der Biegeroboter 3 ist auf zwei Führungsleisten 4, die über ihre Länge hinweg am Grundgestell 2 bzw. an entsprechenden Stützstegen des Grundgestells 2 befestigt sind, verschiebbar am Grundgestell 2 angeordnet und setzt sich im wesentlichen aus einem Führungsschlitten 5, einem schwenkbaren Roboterarm 6 sowie einem an einem Teleskoparm 7 angebrachten Biegekopf 8 zusammen.

Der Biegeroboter 3 läßt sich über den Führungsschlitten 5, der ihn trägt, in Längsrichtung A des Grundgestells 2 entlang der Führungsleisten 4 verfahren. Hierfür ist eine weitere Führungsleiste 9 mit an ihrer Unterseite befestigten Zahnstangensegmenten 10 vorgesehen. Diese Führungsleiste 9 ist an ihrem vorderen und hinteren Ende (genauer gesagt: am vorderen und hinteren Ende des Verfahrweges) jeweils über eine Stützlagerung 11 am Grundgestell 2 befestigt, wobei sie im übrigen zwischen den durch die beiden Stützlagerungen 11 gebildeten Abstützstellen hängend angebracht ist.

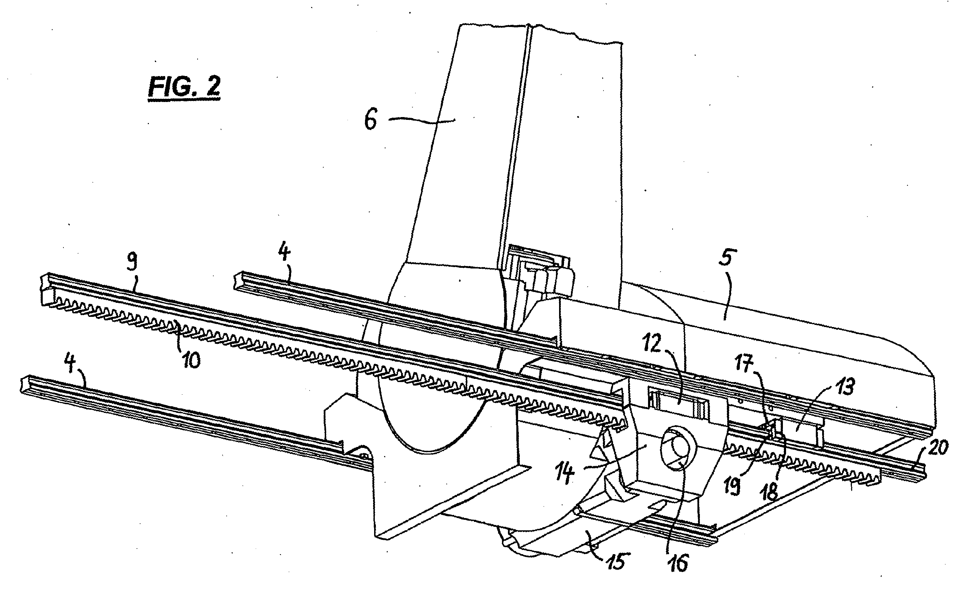

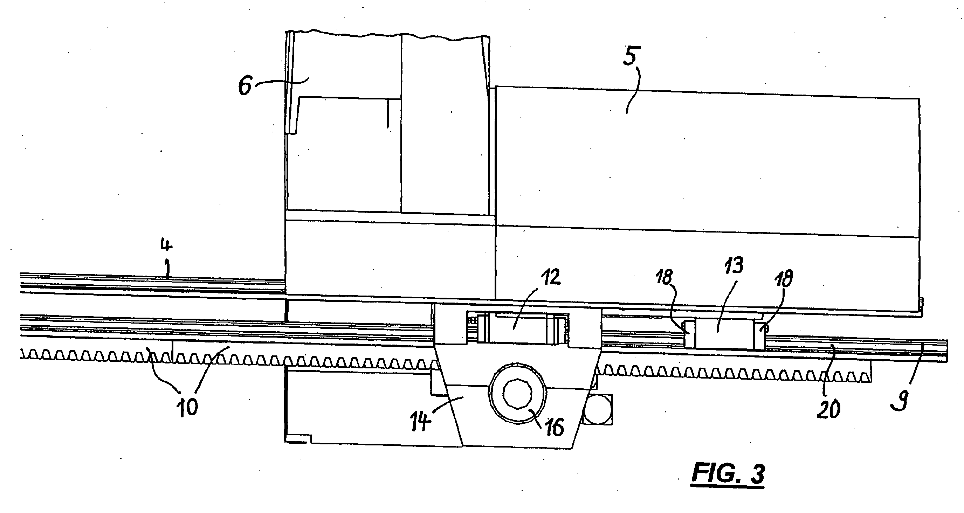

In Fig. 2 ist nun in einer Perspektivansicht von schräg unten ein vergrößerter Ausschnitt des Biegeroboters 3 mit dem Vorschubantrieb dargestellt, und Fig. 3 zeigt den Ausschnitt aus Fig. 2, aber in einer Seitenansicht. Zur besseren Darstellung ist dabei das Grundgestell 2 ausgeblendet.

Der Führungsschlitten 5 des Biegeroboters 3 sitzt auf den am Grundgestell 2 befestigten Führungsleisten 4 als tragenden Führungen.

An der Unterseite des Führungsschlittens 5 sind zwei Führungselemente 12, 13 befestigt, die in Längsrichtung der Führungsleiste 9 zueinander um einen vorgegebenen Abstand versetzt sind, wovon das eine Führungselement 12 in einem Gehäuse 14 angeordnet ist.

Die Führungselemente 12, 13 sind in Form von sich auf der Oberseite der Führungsleiste 9 abstützenden, z. B. aufsitzenden, Führungswagen ausgebildet und können längs der Führungsschiene 9 (welche die Zahnstangensegmente 10 auf ihrer Unterseite trägt) verschoben werden.

Am Gehäuse 14 ist weiterhin ein geeigneter Motor 15 befestigt, der über ein (in Fig. 2 nur ganz prinzipiell angedeutetes) mit der Verzahnung der Zahnstangensegmente 10 kämmendes Ritzel 16 den Führungsschlitten 5 antreibt. Die Lage der beiden Führungselemente 12, 13 am Führungsschlitten 15 ist dabei so gewählt, daß der Bereich der Zahnstange 9, 10 im Gehäuse 14, der mit dem Ritzel 16 in Zahneingriff steht, auf demselben Höhenniveau liegt wie die Stützlagerungen 11.

Wird der Motor 15 eingeschaltet, rollt das Ritzel 16 auf den Zahnstangensegmenten 10 ab und bewegt dabei den Biegeroboter 3 in Längsrichtung A des Grundgestells 2.

Die beiden Führungselemente 12, 13 sind, wie dies aus Fig. 2 erkennbar ist, im Querschnitt U-förmig ausgebildet derart, daß sie die Zahnstange 9, 10 an deren dem Zahneingriff zwischen Ritzel (16) und Verzahnung (10) gegenüberliegenden Bereich übergreifen und sich dabei mit ihrem jeweils obenliegenden Verbindungsschenkel 17 auf der den Zahnstangensegmenten 10 gegenüberliegenden Seite der Führungsleiste 9 (d. h. auf deren Oberfläche) verschiebbar abstützen: dies kann eine direkte, gleitende Anlage der Unterseite des Verbindungsschenkels 17 des betreffenden Führungsschenkels 12 bzw. 13 gegen die Oberfläche der Führungsleiste 9 sein, gleichermaßen könnten aber auch zwischen der Unterseite des Verbindungsschenkels 17 des betreffenden Führungselementes 12 bzw. 13 und der Oberseite der Führungsleiste 9 noch die Reibung herabsetzende Mittel angebracht sein: so etwa eine PTFE-Schicht oder auch die Anordnung von in Längsrichtung der Führungsleiste hintereinander liegenden kleinen Lagerwalzen, Rollen o. ä.

Die Führungselemente 12 und 13 mit ihrem U-förmigen Querschnitt umfassen, in Fig. 2 für das Führungselement 13 zumindest einseitig der Führungsleiste 9 ersichtlich, die Führungsleiste 9 an deren Seitenflanken durch Seitenstege 18, von denen in Fig. 9 nur der Seitensteg 18 an einer Seite des Führungselementes 13 erkennbar ist.

Am frei vorstehenden Ende jedes Seitensteges 18 ist jeweils ein in Richtung zum gegenüberliegenden Seitensteg gerichteter Vorsprung 19 vorgesehen, der in eine seitlich an der Führungsleiste 9 über deren Länge hinweg angebrachte Seitennut 20 formschlüssig (mit etwas Spiel) eingreift.

Damit umfassen die Führungselemente 12 und 13 nicht nur die Führungsleiste 9 seitlich, sondern durch das Eingreifen der Vorsprünge 19 an den Enden der Seitenschenkel 18 wird auch eine Halterung jedes Führungselementes 12 bzw. 13 an der Führungsleiste 9 in dem Sinne erreicht, daß das betreffende Führungselement 12, 13, welches entlang der Führungsleiste 9 verfahrbar ist, nicht in einer Richtung senkrecht zur Verfahrrichtung von der Führungsleiste 9 abgehoben werden kann.

Damit dienen die beiden Führungselemente 12 und 13 als zusätzliche Tragbereiche für die hängend angebrachte Führungsleiste 9. Diese Anordnung sorgt dafür, daß auch bei einem gewissen Durchhängen der Führungsleiste 9 mit den Zahnstangensegmenten 10 der Abstand der Führungsleiste 9 mit den an ihr angebrachten Zahnstangensegmenten 10 zum Führungsschlitten 5 wie auch zum Ritzel 16 im Antriebsbereich immer gleich groß ist, unabhängig davon, wo der Führungsschlitten 5 gerade steht.

Wie der geschilderte Aufbau erkennen läßt, ist das Führungselement 12 im Gehäuse 14 dem Ritzel 16 des Antriebs so zugeordnet, daß es dem Bereich des Zahneingriffs zwischen Ritzel 16 und Zahnstange 10 an der Führungsleiste 9 gegenüberliegend angebracht ist und dort mit seinem Verbindungsschenkel entweder direkt auf der Oberseite der Führungsleiste 9 gleitend anliegt oder, wie bereits weiter oben ausgeführt, zwischen dem Verbindungsschenkel 17 und der Oberseite der Führungsleiste 9 noch die Reibung herabsetzende Mittel, wie z. B. eine Teflonschicht oder Wälzlager oder Rollen o. ä., angebracht sind, über die sich das Führungselement 12 bei einem Verschieben entlang der Führungsleiste 9 auf deren Oberseite abstützt. Das Führungselement 12 bildet dabei eine Art oberes Widerlager über der Stelle des Zahneingriffs zwischen dem Ritzel 16 und den Zahnstangensegmenten 10.

Durch die hängende Anordnung der Führungsleiste 9 zwischen deren beiden Stützlagerungen 11 ist bei der erfindungsgemäßen Linearführung eine besonders leichte Montage möglich und auch nur ein geringer Fertigungsaufwand, verglichen mit bekannten Lösungen, erforderlich, was insbesondere auch für die sonst sehr aufwendige und schwierige Ausrichtung der Führungsleiste 9 mit den an ihr angebrachten Zahnstangensegmenten 10 zutrifft, da hier eben keine über die Länge der Zahnstange hinweg erforderliche Befestigung am Grundgestell 2, und zwar im geforderten Toleranzbereich, nötig ist.

Anstelle der in den Figuren dargestellten Formen für die Führungsleisten 4 und 9 besteht auch die Möglichkeit, Rundführungen einzusetzen, wobei anstelle der Führungsleiste 9 mit den an ihr angebrachten Zahnstangensegmenten 10 hier eine Rundzahnstange einsetzbar ist. Selbstverständlich besteht auch die Möglichkeit, z. B. die Führungsleisten 4 in der in den Figuren gezeigten Form einzusetzen und nur die Führungsleiste 9 mit den Zahnstangensegmenten 10 durch eine Rundzahnstange zu ersetzen.

Die in den Figuren gezeigte Linearführungs-Anordnung kann auch bei relativ großen Verschiebewegen (etwa bei Führungswegen von ca. 3,2 m) problemlos eingesetzt werden.

## Patentansprüche

1. Linearführung (1) mit mindestens zwei lagefest gelagerte Führungsleisten (4), auf denen ein relativ zu ihnen längsverschieblicher Führschlitten (5) angebracht ist, der zur Erzeugung der Relativbewegung gegenüber den Führungsleisten (4) mit einer Antriebseinrichtung versehen ist, die ein Ritzel (16) aufweist, das mit der Verzahnung einer parallel zu den Führungsleisten (4) verlaufenden Zahnstange (9, 10) in Eingriff steht,
***dadurch gekennzeichnet, daß***
die Zahnstange (9, 10) nur an ihrem vorderen und hinteren Ende (11) befestigt und dazwischen hängend angebracht ist, daß am Führungsschlitten (5) ein dem Ritzel (16) zugeordnetes Führungselement (12) befestigt und in Längsrichtung der Zahnstange verschiebbar sowie an ihr formschlüssig gehaltert ist, das die Zahnstange (9, 10) an dem dem Zahneingriff zwischen Ritzel (16) und Verzahnung gegenüberliegenden Bereich übergreift.

2. Linearführung nach Anspruch 1, **dadurch gekennzeichnet, daß** die Zahnstange (9, 10) im Bereich des Zahneingriffs mit dem Ritzel (16) in einer Höhenlage liegt, die der Höhenlage ihrer beiden Befestigungsstellen an ihrem vorderen und hinteren Ende (11) entspricht.

3. Linearführung nach Anspruch 1 oder 2, **dadurch gekennzeichnet, daß** vom Führungselement (12) um einen vorgegebenen Abstand in Längsrichtung der Zahnstange versetzt am Führungsschlitten (5) ein zweites Führungselement (13) befestigt ist, das ebenfalls entlang der Zahnstange (9, 10) verschiebbar und an ihr formschlüssig gehaltert ist.

4. Linearführung nach einem der Ansprüche 1 bis 3, **dadurch gekennzeichnet, daß** das Führungselement (12) und das ihm zugeordnete Ritzel (16) in einem Gehäuse (14) angebracht sind, an dem auch die das Ritzel (16) drehende Antreibseinrichtung (15) befestigt ist.

5. Linearführung nach einem der Ansprüche 1 bis 4, **dadurch gekennzeichnet, daß** jedes Führungselement (12) einen im wesentlichen U-förmigen Querschnitt aufweiset, dessen Mittelsteg (17) sich auf der Zahnstange (9, 10) abstützt und dessen Seitenstege (18) sich an den Seitenflanken der Zahnstange (9, 10) abstützen sowie an ihren freien Enden jeweils mit einem zum anderen Seitensteg (18) hin gerichteten Vorsprung (19) versehen sind, der in eine an der zugewandten Seitenflanke der Zahnstange (9, 10) angebrachte Längsnut (20) formschlüssig eingreift.

6. Linearführung nach einem der Ansprüche 1 bis 5, **dadurch gekennzeichnet, daß** sich die Führungselemente (12, 13) in direkter Anlage gegen die Oberseite der Zahnstange (9, 10) auf dieser gleitend abstützen.

7. Linearführung nach Anspruch 6, **dadurch gekennzeichnet, daß** die Führungselemente (12, 13) mit einer reibmindernden Schicht, bevorzug einer PTFE-Schicht, auf ihrer der Oberseite der Zahnstange (9, 10) zugewandten Seite versehen sind.

8. Linearführung nach einem der Ansprüche 1 bis 5, **dadurch gekennzeichnet, daß** sich die Führungselemente (12, 13) auf der Zahnstange (9, 10) über Wälzlager oder Stützrollen abstützen

9. Linearführung nach einem der Ansprüche 1 bis 8, **dadurch gekennzeichnet, daß** die Zahnstange aus einer weiteren Führungsleiste (9) mit an deren Unterseite befestigten Zahnstangensegmenten (10) gebildet ist.

10. Linearführung nach einem der Ansprüche 1 bis 8, **dadurch gekennzeichnet, daß** die Zahnstange eine Rundzahnstange ist.

11. Linearführung nach einem der Ansprüche 1 bis 10, **dadurch gekennzeichnet, daß** am Führungsschlitten (5) ein Biegeroboter (3) oder ein Drehgreifer angebracht ist.

12. Linearführung nach einem der Ansprüche 1 bis 11, **dadurch gekennzeichnet, daß** das bzw. die Führungselemente (12, 13) an der Unterseite des Führungsschlittens (5) vorgesehen ist/sind.

13. Linearführung nach einem der Ansprüche 1 bis 12, **dadurch gekennzeichnet, daß** sie auf einem Grundgestell (2) einer Rohr- oder einer Drahtbiegemaschine angebracht ist.

## Claims

1. A linear guide (1) comprising at least two stationarily supported guide bars (4), on which a guide block (5) is mounted, which is longitudinally displaceable relative to said guide bars (4), said guide block (5) being provided with a driving unit to generate a relative movement with respect to the guide bars (4), said driving unit comprising a pinion (16) which meshes with the teeth of a toothed rack (9, 10) extending in parallel with the guide bars (4),
***characterized in that***
the toothed rack (9, 10) is mounted only at its front and rear ends (11) and suspended in-between, that a guiding element (12) assigned to the pinion (16) is mounted to the guide block (5) so as to be displaceable in the longitudinal direction of the toothed rack on which it is supported in a form-locking manner, said guiding element (12) engaging over the toothed rack (9, 10) at the region opposite the mesh between the pinion (16) and the teeth.

2. The linear guide as claimed in claim 1, **characterized in that** the toothed rack (9, 10) is located at a level of height, in the region of mesh with the pinion (16), which corresponds to the level of height of its two mounting locations at its front and rear ends (11).

3. The linear guide as claimed in claim 1 or 2, **characterized in that** a second guiding element (13) is mounted to the guide block (5) at a predetermined distance from the guiding element (12) in the longitudinal direction of the toothed rack, said second guiding element (13) also being displaceable along the toothed rack (9, 10) and being supported on the latter in a form-locking manner.

4. The linear guide as claimed in any one of claims 1 to 3, **characterized in that** the guiding element (12) and its assigned pinion (16) are mounted in a housing (14) to which the driving unit (15) rotating the pinion (16) is also mounted.

5. The linear guide as claimed in any one of claims 1 to 4, **characterized in that** each guiding element (12) has a substantially U-shaped cross-section, whose connecting leg (17) is supported on the toothed rack (9, 10) and whose lateral legs (18) are supported on the lateral flanks of the toothed rack (9, 10) and respectively comprise, at their free ends, a projection (19) which is directed to the respective other lateral leg (18) and engages in a form-locking manner in a longitudinal groove (20) provided on the lateral flank of the toothed rack (9, 10) facing said projection (19).

6. The linear guide as claimed in any one of claims 1 to 5, **characterized in that** the guiding elements (12, 13) are supported on the toothed rack (9, 10) in direct sliding contact with the top surface of the toothed rack (9, 10).

7. The linear guide as claimed in claim 6, **characterized in that** the guiding elements (12, 13) are provided with a friction-reducing layer, preferably a PTFE layer, on their side facing the top surface of the toothed rack (9, 10).

8. The linear guide as claimed in any one of claims 1 to 5, **characterized in that** the guiding elements (12, 13) are supported on the toothed rack (9, 10) via roller bearings or supporting rolls.

9. The linear guide as claimed in any one of claims 1 to 8, **characterized in that** the toothed rack is formed by a further guide bar (9) with toothed rack segments (10) mounted to the bottom surface of said guide bar (9).

10. The linear guide as claimed in any one of claims 1 to 8, **characterized in that** the toothed rack is a round toothed rack.

11. The linear guide as claimed in any one of claims 1 to 10, **characterized in that** a bending robot (3) or a rotary gripper is mounted to the guide block (5) .

12. The linear guide as claimed in any one of claims 1 to 11, **characterized in that** the guiding element/s (12, 13) is/are provided on the bottom surface of the guide block (5).

13. The linear guide as claimed in any one of claims 1 to 12, **characterized in that** it is mounted to a base frame (2) of a pipe- or wire-bending machine.

## Revendications

1. Guidage linéaire (1), avec au moins deux réglettes de guidage fixes (4) sur lesquelles est disposé un chariot guidé (5), mobile longitudinalement par rapport à elles, qui est pourvu, pour effectuer un mouvement relatif par rapport aux réglettes de guidage, d'un dispositif d'entraînement présentant un pignon (16) engrenant avec les dents d'une crémaillère (9, 10) s'étendant parallèlement aux réglettes de guidage (4),
**caractérisé en ce que**
la crémaillère (9, 10) n'est fixée qu'à ses extrémités avant et arrière et est suspendue entre les deux, qu'un élément de guidage (12) destiné au pignon (16) est fixé sur le chariot et y est maintenu, par concordance de forme, déplaçable dans le sens longitudinal de la crémaillère, qui embrasse la crémaillère (9, 10) dans sa zone opposée à l'engrainement entre le pignon (16) et les dents.

2. Guidage linéaire selon la revendication 1, **caractérisé en ce que** la crémaillère (9, 10) se trouve, dans la zone de l'engrainement entre le pignon (16) et les dents, à une position en hauteur correspondant à la position en hauteur de ses deux points de fixation de ses extrémités avant et arrière.

3. Guidage linéaire selon la revendication 1 ou 2, **caractérisé en ce qu'**un second élément de guidage (13) est fixé au chariot guidé (5) à un intervalle prédéterminé de l'élément de guidage (12) dans le sens longitudinal de la crémaillère (9, 10) et y est maintenu par concordance de forme.

4. Guidage linéaire selon l'une des revendications 1 à 3, **caractérisé en ce que** l'élément de guidage (12) et le pignon (16) qui lui est affecté sont disposés dans un boîtier auquel le dispositif d'entraînement (15) du pignon (16) est également fixé.

5. Guidage linéaire selon l'une des revendications 1 à 4, **caractérisé en ce que** chaque élément de guidage (12) présente une section droite essentiellement en U dont la traverse centrale (17) s'appuie sur la crémaillère (9, 10) et dont les branches latérales (18) s'appuient contre les flancs latéraux de la crémaillère (9, 10) et est également pourvu à ses extrémités libres respectives d'une saillie (19) dirigée vers l'autre branche latérale (18) qui pénètre dans une rainure longitudinale (20) pratiquée dans le flanc latéral de la crémaillère (9, 10) tourné vers elle.

6. Guidage linéaire selon l'une des revendications 1 à 5, **caractérisé en ce que** les éléments de guidage (12, 13) s'appuient directement contre le côté supérieur de la crémaillère (9, 10) de manière à glisser.

7. Guidage linéaire selon la revendication 6, **caractérisé en ce que** les éléments de guidage (12, 13) sont pourvus d'une couche réduisant les frottements, de préférence une couche de PTFE, sur leur face tournée vers le côté supérieur de la crémaillère (9, 10).

8. Guidage linéaire selon l'une des revendications 1 à 5, **caractérisé en ce que** les éléments de guidage (12, 13) s'appuient sur la crémaillère (9, 10) au moyen de paliers de roulement ou de galets d'appui.

9. Guidage linéaire selon l'une des revendications 1 à 8, **caractérisé en ce que** la crémaillère est formée par une réglette supplémentaire (9) sur la surface inférieure de laquelle est fixé un segment denté (10).

10. Guidage linéaire selon l'une des revendications 1 à 8, **caractérisé en ce que** la crémaillère est une crémaillère ronde.

11. Guidage linéaire selon l'une des revendications 1 à 10, **caractérisé en ce qu'**un robot à courber (3) ou un préhenseur rotatif est monté sur le chariot guidé(5).

12. Guidage linéaire selon l'une des revendications 1 à 11, **caractérisé en ce que** le ou les éléments de guidage (12, 13) est/sont prévu(s) sur la face inférieure du chariot (5).

13. Guidage linéaire selon l'une des revendications 1 à 12, **caractérisé en ce qu'**il est monté sur le châssis d'une machine à courber les tubes ou les fils.
